# EUROPÄISCHE PATENTSCHRIFT

(11) **EP 0 403 732 B1**
(45) Veröffentlichungstag und Bekanntmachung des Hinweises auf die Patenterteilung: **19.05.1993**
(21) Anmeldenummer: 90104573.2
(22) Anmeldetag: 10.03.1990
(51) Int. Cl.: B23B 31/12

(54) **Selbstspannendes Bohrfutter**
Self-clamping drill chuck
Mandrin de perçage autoserrant

(30) Priorität: 20.06.1989 DE 3920075
(43) Veröffentlichungstag der Anmeldung: 27.12.1990
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 316 522
- GB-A- 1 484 354
- US-A- 2 880 007
- US-A- 3 350 108

## Beschreibung

Die Erfindung betrifft ein selbstspannendes Bohrfutter mit einem zum Anschluß an eine Bohrspindel eingerichteten Futterkörper, mit einer Spannhülse, die drehbar und axial unverschiebbar am Futterkörper geführt ist und einen mit ihr drehfest verbundenen Backenhalter aufnimmt, und mit in Führungsausnehmungen des Backenhalters radial und axial verschiebbar angeordneten, zwischen sich eine Aufnahme für ein Bohrwerkzeug bildenden Spannbacken, die außer in den Führungsausnehmungen des Backenhalters auch an einer radial inneren Kegelfläche der Spannhülse geführt sind.

Bei aus der DE 37 39 165 A1 bekannten Bohrfuttern dieser Art sind zur drehfesten Verbindung des Backenhalters mit der Spannhülse in diesen beiden Teilen einander radial gegenüber liegende Aussparungen vorgesehen, die gemeinsam eine Aufnahme für eine darin angeordnete Sperrkugel bilden, die den Backenhalter und die Spannhülse gegen Relativverdrehungen verriegelt. Dabei kann an einem der beiden Teile die Aussparung axial etwas größer als der Durchmesser der Sperrkugel sein, so daß der Backenhalter gegenüber der Spannhülse ein entsprechend begrenztes axiales Verschiebungsspiel besitzt. Die Aussparungen und die darin liegende Sperrkugel befinden sich an dem vom Werkzeug abgewandten futterkörperseitigen Ende des Backenhalters. Dagegen sind die beim Spannen des Bohrwerkzeugs und beim Bohren zwischen den Spannbacken und dem Backenhalter auftretenden Kräfte und Momente am entgegen gesetzten, also werkzeugseitigen, vom Futterkörper abgewandten Ende des Backenhalters zu übertragen, d. h. an den zwischen den Führungsausnehmungen für die Spannbacken gebildeten segmentförmigen Wandteilen des Backenhalters, die somit vom Kraftfluß zwischen den Spannbacken und der Spannhülse so belastet werden, daß sie sich verformen können, was zur Folge haben kann, daß dadurch der Backenhalter in der Spannhülse klemmt und darunter die Zentrierung des Backenhalters in Bezug auf die Futterachse und die Nachspannwirkung des Bohrfutters insgesamt leiden.

Der Erfindung liegt die Aufgabe zugrunde, ein Bohrfutter der eingangs genannten Art so auszubilden, daß diese Nachteile vermieden werden und der Kraftfluß im Backenhalter zwischen den Spannbacken einerseits und der Spannhülse andererseits so übertragen wird, daß der Backenhalter, insbes. an seinen segmentförmigen Wandteilen zwischen den Führungsausnehmungen, sich nicht verformen und in der Spannhülse verklemmen kann.

Diese Aufgabe wird nach der Erfindung dadurch gelöst, daß der Backenhalter am werkzeugseitigen, vom Futterkörper abgewandten Ende radial abstehende Nasen aufweist, die in Umfangsrichtung des Bohrfutters formschlüssig in auf der Innenseite der Spannhülse vorgesehene Aussparungen greifen.

Dadurch werden der Backenhalter und insbes. jedes seiner segmentförmigen Wandteile für sich unmittelbar am werkzeugseitigen Ende, also dort, wo gerade die Kräfte auftreten, gegen die Spannhülse in Umfangsrichtung abgestützt und gegen Verdrehen an der Spannhülse gesichert. Verformungen dieser Wandteile und des Backenhalters insgesamt von einer die Nachspannwirkung beeinträchtigenden Bedeutung können nicht mehr auftreten.

Vorzugsweise sind die Nasen beidseits und unmittelbar neben jeder Führungsausnehmung vorgesehen, so daß die Abstützung und Sicherung des Backenhalters an dor Spannhülse unmittelbar neben jeder Führungsausnehmung und unabhängig von der Drehrichtung erfolgt. In weiter bevorzugter Ausführungsform sind die Aussparungen als parallel zur Futterachse verlaufende Nuten ausgebildet, in welchen die Nasen mit dem Backenhalter axial verschiebbar sind, wodurch für den Backenhalter auch trotz der Sicherung durch die Nasen ein für seine Zentrierung in der Spannhülse gewünschtes axiales Verschiebungsspiel ermöglicht wird.

Es empfiehlt sich, daß die Nasen in den Ecken eines in die äußere Kegelfläche des Backenhalters etwa ein einbeschriebenen gleichseitigen Sechskants angeordnet sind, der bezogen auf die zu dritt in gleichen Umfangsabständen voneinander vorgesehenen Spannbacken so ausgerichtet ist, daß die in der Futterachse liegenden Mittelebenen der Führungsausnehmungen die Sechskantseiten jeweils mittig schneiden. Die Flankenflächen der Nasen und der sie aufnehmenden Aussparungen liegen dann zweckmäßig in den Sechskantseiten und schließen an der Nasenspitze jeweils einen Winkel von 60° ein.

Im übrigen ist in bevorzugter Ausführungsform an der Spannhülse zwischen den Nasen und am Backenhalter zwischen den Aussparungen je eine zylindrische Bundfläche vorgesehen, die eine zusätzliche Zentrierung dos Backenhalters in Bezug auf die Spannhülse bildet.

Im folgenden wird die Erfindung an einem in der Zeichnung dargestellten Ausführungsbeispiel naher erläutert; es zeigen:

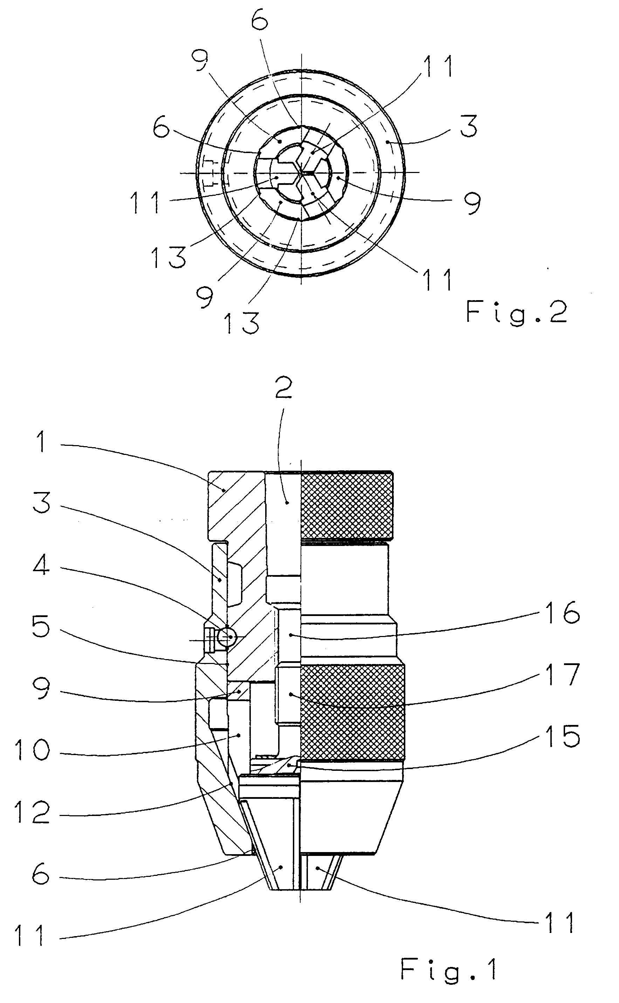

- Fig. 1: ein Bohrfutter nach der Erfindung, und zwar in der linken Bildhälfte im Axialschnitt, in der rechten in einer Seitenansicht,
- Fig. 2: das Bohrfutter nach Fig. 1 in einer Ansicht gegen das werkzeugseitige, in Fig. 1 untere Ende des Bohrfutters,

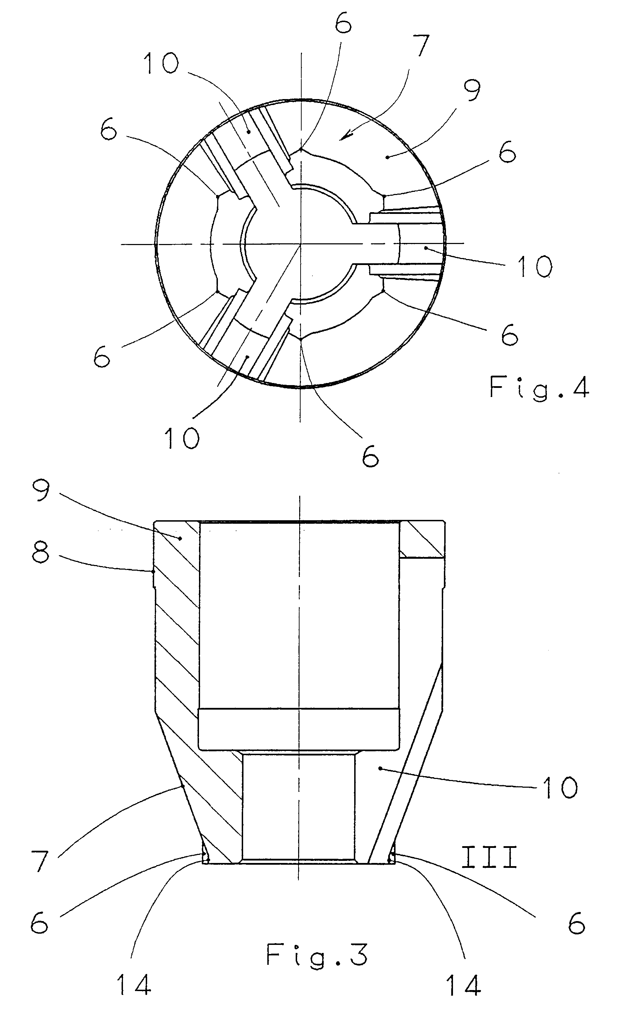

- Fig. 3: den Backenhalter des Bohrfutters nach den Fig. 1 und 2 in einem Axialschnitt, wobei das mit III bezeichnete Detail um 30° versetzt gezeichnet ist,
- Fig. 4: den Backenhalter nach Fig. 3 in einer Ansicht gegen das werkzeugseitige Ende,

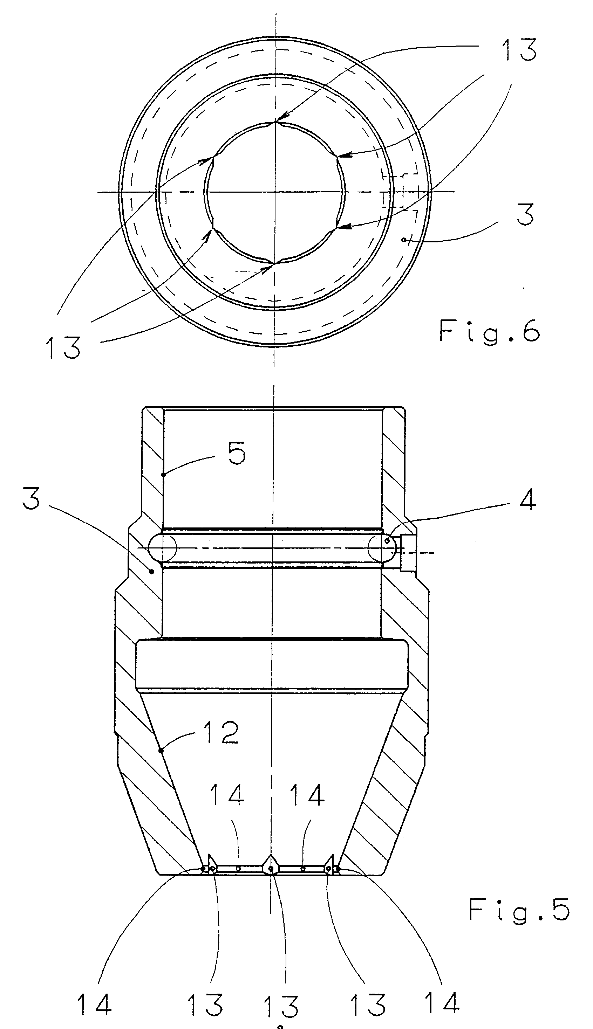

- Fig. 5: die Spannhülse des Bohrfutters nach den Fig. 1 und 2 in einem Axialschnitt, und
- Fig. 6: die Spannhülse nach Fig. 5 in einer Ansicht gegen das werkzeugseitige Ende.

In der Zeichnung ist der Futterkörper mit 1 bezeichnet. Er besitzt eine Aufnahme 2 zum Anschluß an eine nicht dargestellte Bohrspindel. Eine Spannhülse 3 ist mittels einer Kugellagerung 4 drehbar und axial unverschiebbar am Futterkörper 1 gehalten und in einer sich axial beidseits der Kugellagerung 4 erstreckenden Zylinderfläche 5 am Futterkörper 1 geführt. Zur Bildung der Kugellagerung 4 befinden sich am Futterkörper 1 und an der Spannhülse 3 jeweils in der Zylinderfläche 5 offene, einander radial gegenüber liegende Ringnuten, die sich gegenseitig zu einem Lagerkanal ergänzen, in dem die Kugeln der Kugellagerung 4 umlaufen und die Spannhülse 3 und den Futterkörper 1 axial gegeneinander abstützen. Ferner ist ein Backenhalter 9 vorgesehen, der im wesentlichen als radiale Schlitze ausgebildete Führungsausnehmungen 10 aufweist, in welchen radial und axial verschiebbare Spannbacken 11 angeordnet sind, die zwischen sich eine in der Zeichnung geschlossen dargestellte Aufnahme für ein nicht gezeichnetes Bohrwerkzeug bilden. Die Spannbacken 11 sind an einer radial inneren Kegelfläche 12 der Spannhülse 3 geführt, die den sich mit ihr drehenden Backenhalter 9 axial werkzeugseitig vor dem Futterkörper 1 aufnimmt. Die Zylinderfläche 5 an der Spannhülse 3 ist über das spannbackenseitige Ende des Futterkörpers 1 hinaus verlängert. Innerhalb dieser Zylinderfläche liegt der Backenhalter 9, der mit seinem äußeren Umriß im Ergebnis nirgends radial über die Zylinderfläche 5 nach außen vorsteht, so daß er axial in die Spannhülse 3 von deren hinterer Öffnung aus bis zur Kegelfläche 12 eingeschoben werden kann. Der Backenhalter 9 ist gegenüber der Spannhülse 3 und dem Futterkörper 1 axial begrenzt verschieblich angeordnet gegen den Futterkörper 1 abgestützt. Im einzelnen ist er an der Zylinderfläche 5 der Spannhülse 3 mit einer entsprechenden äußeren Zylinderfläche 8 zentriert und sitzt mit einer äußeren Kegelfläche 7 der inneren Kegelfläche 12 der Spannhülse 3 auf.

Zur drehschlüssigen Verbindung zwischen der Spannhülse 3 und dem Backenhalter 9 sind am werkzeugseitigen Ende des Backenhalters 9 radial abstehende Nasen 6 vorgesehen, die in Umfangsrichtung des Bohrfutters formschlüssig in auf der Innenseite der Spannhülse 3 vorgesehene Aussparungen 13 greifen. Diese Aussparungen 13 sind als parallel zur Futterachse verlaufende Nuten ausgebildet, in welchen die Nasen 6 mit dem Backenhalter 9 axial verschiebbar sind, so daß durch die Nasen 6 die axiale Beweglichkeit des Backenhalters 9 nicht beeinträchtigt wird. Die Nasen 6 sind beidseits und unmittelbar neben jeder Führungsausnehmung 10 vorgesehen. Sie sitzen in den Ecken eines in die äußere Kegelfläche 7 des Backenhalters etwa einbeschriebenen gleichseitigen Sechskants, der bezogen auf die zu dritt in gleichen Umfangsabständen voneinander vorgesehenen Spannbacken 11 so ausgerichtet ist, daß die in der Futterachse liegenden Mittelebenen der Führungsausnehmungen 10 die Sechskantseiten jeweils mittig schneiden. Die Flankenflächen der Nasen 6 und der sie aufnehmenden Aussparungen 13 liegen bzw. verlaufen in den Sechskantseiten und schließen an der Nasenspitze jeweils einen Winkel von 60° ein. An der Spannhülse 3 ist zwischen den Nasen 6 und am Backenhalter 9 zwischen den Aussparungen 13 je eine zylindrische Bundfläche vorgesehen. In dieser Bundfläche 14 liegen die Spannhülse 3 und der Backenhalter 9 aneinander, so daß die Bundfläche 14 eine zusätzliche Zentrierung des Backenhalters 9 in Bezug auf die Spannhülse 3 bildet.

Die Spannbacken 11 sind zu ihrer Verstellung axial gegen ein Mitnehmerstück 15 abgestützt, wobei diese Abstützung so ausgebildet ist, daß Verdrehungen des Mitnehmerstücks 15 gegenüber den Spannbacken 11 und der Spannhülse 3 unmöglich sind. Im Ausführungsbeispiel wird dies dadurch erreicht, daß die Spannbacken 11 am Mitnehmerstück 15 in dort radial verlaufenden Nuten geführt sind. Das Mitnehmerstück 15 ist in einer zentralen Ausnehmung 16 des Backenhalters 9 axial verstellbar. Dazu ist es mit einem zur Futterachse koaxialen Spannzapfen 17, der ein Außengewinde trägt, in einem Muttergewinde des Futterkörpers 1 verdrehbar. Wird die Spannhülse 3 gegenüber dem Futterkörper 1 verdreht, so erfährt der sich dann über die Spannbacken 11 und den Backenhalter 9 entsprechend mitdrehende Spannzapfen 17 des Mitnehmerstücks 15 je nach Drehrichtung im Muttergewinde eine axiale Vor- oder Rückverstellung, was im ersten Fall ein Spannen, im zweiten Fall ein Lösen der Spannbacken 11 am Bohrwerkzeug zur Folge hat. Die sich dabei zwischen dem Futterkörper 1 einerseits und der Spannhülse 3 andererseits aufbauenden Spann- bzw. Nachspannkräfte werden axial über die Kugellagerung 4 übertragen.

## Patentansprüche

1. Selbstspannendes Bohrfutter mit einem zum Anschluß an eine Bohrspindel eingerichteten Futterkörper (1), mit einer Spannhülse (3), die drehbar und axial unverschiebbar am Futterkörper (1) geführt ist und einen mit ihr drehfest verbundenen Backenhalter (9) aufnimmt, und mit in Führungsausnehmungen (10) des Backenhalters (9) radial und axial verschiebbar angeordneten, zwischen sich eine Aufnahme für ein Bohrwerkzeug bildenden Spannbacken (11), die außer in den Führungsausnehmungen (10) des Backenhalters (9) auch an einer radial inneren Kegelfläche (12) der Spannhülse (3) geführt sind, dadurch gekennzeichnet, daß der Backenhalter (9) am werkzeugseitigen, vom Futterkörper (1) abgewandten Ende radial abstehende Nasen (6) aufweist, die in Umfangsrichtung des Bohrfutters formschlüssig in auf der Innenseite der Spannhülse (3) vorgesehene Aussparungen (13) greifen.

2. Bohrfutter nach Anspruch 1, dadurch gekennzeichnet, daß die Nasen (6) beidseits und unmittelbar neben jeder Führungsausnehmung (10) vorgesehen sind.

3. Bohrfutter nach Anspruch 1 oder 2, dadurch gekennzeichnet, daß die Aussparungen (13) als parallel zur Futterachse verlaufende Nuten ausgebildet sind, in welchen die Nasen (6) mit dem Backenhalter (9) axial verschiebbar sind.

4. Bohrfutter nach einem der Ansprüche 1 bis 3, dadurch gekennzeichnet, daß die Nasen (6) in den Ecken eines in die äußere Kegelfläche (7) des Backenhalters (9) etwa einbeschriebenen gleichseitigen Sechskants angeordnet sind, der bezogen auf die zu dritt in gleichen Umfangsabständen von einander vorgesehenen Spannbacken (11) so ausgerichtet ist, daß die in der Futterachse liegenden Mittelebenen der Führungsausnehmungen (10) die Sechskantseiten jeweils mittig schneiden.

5. Bohrfutter nach Anspruch 4, dadurch gekennzeichnet, daß die Flankenflächen der Nasen (6) und der sie aufnehmenden Aussparungen (13) in den Sechskantseiten liegen und an der Nasenspitze jeweils einen Winkel von 60° einschließen.

6. Bohrfutter nach einem der Ansprüche 1 bis 5, dadurch gekennzeichnet, daß an der Spannhülse (3) zwischen den Nasen (6) und am Backenhalter (9) zwischen den Aussparungen (13) je eine zylindrische Bundfläche (14) vorgesehen ist, die eine zusätzliche Zentrierung des Backenhalters (9) in Bezug auf die Spannhülse (3) bildet.

## Claims

1. A self- tightening drilling chuck with a chuck body (1) which is designed for connection to a drilling spindle, a clamping sleeve (3) which is guided rotatably and axially immovably on the chuck body (1) and accomodates a jaw holder (9) non-rotatably connected to the clamping sleeve, and clamping jaws (11) which are arranged radially and axially displaceably in guide openings (10) in the jaw holder (9) and which form between them a receiving means for a drilling tool and which besides being guided in the guide openings (10) in the jaw holder (9) are also guided at a radially inward conical surface (12) of the clamping sleeve (3), characterised in that at the end which is towards the tool and which is remote from the chuck body (1) the jaw holder (9) has radially projecting noses (6) which engage positively in the peripheral direction of the drilling chuck into recesses (13) provided on the inside of the clamping sleeve (3).

2. A drilling chuck according to claim 1 characterised in that the noses (6) are provided on both sides of and immediately beside each guide opening (10).

3. A drilling chuck according to claim 1 or claim 2 characterised in that the recesses (13) are in the form of grooves which extend parallel to the chuck axis and in which the noses (6) are axially displaceable with the jaw holder (9).

4. A drilling chuck according to one of claims 1 to 3 characterised in that the noses (6) are arranged in the corners of an equilateral hexagon which is approximately inscribed in the outer conical surface (7) of the jaw holder (9) and which is so oriented relative to the clamping jaws (11) which are provided in threes at equal peripheral spacings from each other that the central planes of the guide openings (10), which planes lie on the chuck axis, each centrally intersect the sides of the hexagon.

5. A drilling chuck according to claim 4 characterised in that the flank surfaces of the noses (6) and the recesses (13) accommodating them lie in the sides of the hexagon and each include an angle of 60° at the nose tip.

6. A drilling chuck according to one of claims 1 to 5 characterised in that cylindrical collar surfaces (14) are respectively provided on the clamping sleeve (3) between the noses (6) and on the jaw holder (9) between the recesses (13) and form an additional centering means for the jaw holder (9) in relation to the clamping sleeve (3).

## Revendications

1. Mandrin de serrage autobloquant, comprenant un corps de mandrin (1) agencé pour le raccordement à une broche de perçage, une douille de serrage (3) qui est guidée de manière tournante et axialement immobile sur le corps de mandrin (1) et reçoit un support de mâchoires (9) solidaire en rotation avec ladite douille de serrage, et des mâchoires de serrage (11) montées de manière mobile dans le sens radial et axial dans des évidements de guidage (10) du support de mâchoires (9) et formant entre elles un logement pour un outil de perçage, qui sont également guidées, en plus des évidements de guidage (10) du support de mâchoires (9), sur une surface conique (12) radialement intérieure de la douille de serrage (3), **caractérisé par le fait** qu'à l'extrémité côté outil, opposée au corps de mandrin (1), le support de mâchoires (9) présente des talons (6) en saillie dans le sens radial qui pénètrent à engagement positif, dans le sens circonférentiel du mandrin de serrage, dans des évidements (13) prévus dans la face intérieure de la douille de serrage (3).

2. Mandrin de serrage selon la revendication 1, caractérisé par le fait que les talons (6) sont prévus de part et d'autre immédiatement à côté de chaque évidement de guidage (10).

3. Mandrin de serrage selon l'une des revendications 1 ou 2, caractérisé par le fait que les évidements (13) sont conformés en rainures qui s'étendent parallèlement à l'axe du mandrin et dans lesquelles les talons (6) peuvent être déplacés, avec le support de mâchoires (9), dans le sens axial.

4. Mandrin de serrage selon l'une des revendications 1 à 3, caractérisé par le fait que les talons (6) sont disposés dans les coins d'un hexagone équilatéral inscrit sensiblement dans la surface conique extérieure (7) du support de mâchoires (9), lequel hexagone est orienté par rapport aux mâchoires de serrage (11) prévues au nombre de trois à égales distances périphériques de telle façon que les plans médians des évidements de guidage (10) situés dans l'axe du mandrin coupent les côtés de l'hexagone respectivement par le milieu.

5. Mandrin de serrage selon la revendication 4, caractérisé par le fait que les flancs des talons (6) et des évidements (13) qui les reçoivent se situent dans les côtés de l'hexagone et renferment respectivement au sommet du talon un angle de 60°.

6. Mandrin de serrage selon l'une des revendications 1 à 5, caractérisé par le fait que sur la douille de serrage (3), entre les talons (6), et sur le support de mâchoires (9), entre les évidements (13), est respectivement prévue une surface de collet cylindrique (14) qui constitue un centrage supplémentaire du support de mâchoires (9) par rapport à la douille de serrage (3).
